# FASCICULE DE BREVET EUROPEEN

(11) **EP 3 512 343 B1**
(45) Date de publication et mention de la délivrance du brevet: **23.12.2020**
(21) Numéro de dépôt: 17777310.8
(22) Date de dépôt: 14.09.2017
(51) Int. Cl.: A21B 1/26, A21B 1/48

(54) **MODULE DE CUISSON DE FOUR TUNNEL LINÉAIRE POUR PRODUITS DE BOULANGERIE, VIENNOISERIE ET SIMILAIRES ET FOUR TUNNEL LINÉAIRE COMPORTANT AU MOINS UN TEL MODULE**
KOCHMODUL FÜR EINEN LINEAREN TUNNELOFEN FÜR BACKWAREN, FEINGEBÄCK UND DERGLEICHEN UND LINEARER TUNNELOFEN MIT MINDESTENS EINEM SOLCHEN MODUL
COOKING MODULE FOR A LINEAR TUNNEL OVEN FOR BAKERY PRODUCTS, PASTRIES AND THE LIKE, AND LINEAR TUNNEL OVEN COMPRISING AT LEAST ONE SUCH MODULE

(30) Priorité: 14.09.2016 FR 1658550
(43) Date de publication de la demande: 24.07.2019
(73) Titulaire: MECATHERM, 67130 Barembach (FR)
(72) Inventeur: SERGENT, Olivier, 75007 Paris (FR)
(74) Mandataire: Cabinet Bleger-Rhein-Poupon
(86) Numéro de dépôt international: PCT/FR2017/052459
(87) Numéro de publication internationale: WO 2018/051027

(56) Documents cités:
- WO-A1-02/073093
- BE-A- 535 353
- DE-A1- 2 150 192
- DE-U1-202005 004 240
- US-A- 4 591 333

## Description

L'invention concerne un module de cuisson de four tunnel linéaire mono ou multi-étagé, utilisé en boulangerie industrielle pour la cuisson de produits de boulangerie, viennoiserie et similaires.

Les fours tunnels linéaires comportent principalement une chambre de cuisson, avec ses moyens de chauffage en sole et en voûte. Par ailleurs, ce type de four comporte usuellement une sole sous forme d'un tapis transporteur sur lequel sont amenés à reposer, directement ou indirectement, les produits à cuire ou précuire et assurant leur acheminement au travers de ladite chambre de cuisson.

La cuisson des produits pendant leur transit à travers de la chambre de cuisson d'un four tunnel se fait principalement grâce à la chaleur de « sole » et la chaleur dispensée par la voûte de la chambre grâce à des moyens de chauffage adaptés.

Plus particulièrement, dans l'état actuel de la technique pour les différents types de fours tunnels linéaires existants, ces moyens de chauffage assurent la cuisson :
- soit, en l'absence de moyens de soufflage et/ou brassage, uniquement par rayonnement et par conduction avec des radiateurs disposés en sole et en voûte traversés par des fluides caloporteurs ;
- soit exclusivement par convection avec des dispositifs de soufflage de gaz caloporteurs, soufflant verticalement (au sens de la définition technique de la convection), du bas vers le haut au travers d'un tapis transporteur perméable pour l'échange de la chaleur en sole, et d'un soufflage convectif du haut vers le bas pour la chaleur de voûte.
- soit par rayonnement et conduction, complétés par des dispositifs de brassage d'air destinés aussi bien à uniformiser la cuisson qu'à optimiser la densité de charge en pâte possible au m², et enfin à raccourcir légèrement le temps de cuisson.

Dans ce dernier type de fours, à savoir les fours tunnels assurant la cuisson par rayonnement et conduction, complétés par des dispositifs de brassage d'air, on distingue :
- les fours à rayonnement équipés de radiateurs à fluide d'huile thermique, disposés en sole et en voûte, souvent équipés de dispositifs de brassage d'air localisés dans les rives de la chambre de cuisson, mettant en mouvement l'air contenu dans ladite chambre de cuisson qui est élevée et maintenue en chaleur par rayonnement des radiateurs.
- les fours, notamment décrits dans le document WO 2005/117593, qui sont équipés en sole et en voûte de radiateurs chauffés par des gaz caloporteurs avec, pour particularité, des radiateurs de sole qui ne sont pas directement et au plus près sous le tapis transporteur, mais en contrebas à une distance de quelques centimètres. La zone ainsi libérée entre le radiateur et le tapis transporteur forme un plénum permettant le soufflage d'air réchauffé au contact du radiateur entre une série de buses de soufflage et une série de fentes d'aspiration disposées face à face selon un plan horizontal parallèle au tapis de cuisson. Il convient d'observer que, dans ces fours selon l'état de la technique, il n'y a qu'une faible partie du volume d'air soufflé qui traverse le tapis de cuisson, étant donné que les buses de soufflage et les fentes d'aspiration se trouvent tous deux sous le tapis transporteur. De plus, ce soufflage n'est pas une convection mais une advection, étant donné qu'il s'effectue dans un plan horizontal.
- les fours à convection de sole avec un soufflage de gaz caloporteurs verticalement au travers du tapis transporteur, tels que connus, par exemple par le document WO 2014/53745. Ces fours assurent une cuisson par convection et par rayonnement de la sole. En particulier, ce four comporte, directement sous le tapis transporteur perméable, des gaines formant radiateur traversées par le fluide caloporteur. Plus précisément, ces gaines comportent des buses de soufflage sous le tapis transporteur d'où ressort le fluide caloporteur insufflé dans ces gaines. En somme, ces fours connus sont dans l'impossibilité d'assurer une cuisson exclusivement par rayonnement en sole, étant donné que ce sont les gaz chauds de convection qui assurent, lors de leur transit à travers leurs gaines de distribution, le chauffage desdites gaines et donc leur rayonnement. En cas de mise à l'arrêt de la convection, le four n'a plus de chauffage en sole et, par voie de conséquence, plus de rayonnement.

Dans l'état de la technique actuel, il est également connu un quatrième type de fours tunnels assurant la cuisson électriquement, par un chauffage par résistances électriques disposées en sole sous le tapis transporteur pour le chauffage par rayonnement de la sole et avec des résistances électriques disposées en voûte par rayonnement depuis la voûte.

Ces fours sont simplement des fours fonctionnant par rayonnement avec l'éventualité du rajout de dispositif de brassage de l'air de la chambre de cuisson et la cuisson par convection de sole n'est pas possible.

Dans les quatre types de fours tunnels décrits précédemment, les produits peuvent être cuits en étant disposés directement sur le tapis transporteur (cuisson dite sur sole), ou bien ils peuvent être préalablement disposés sur des plaques ou dans des moules. Ce type de cuisson est usuellement appelé cuisson sur plaques ou cuisson en moules.

Dans les quatre types de fours tunnels décrits précédemment, les tapis transporteurs peuvent être plus ou moins perméables avec des taux de perméabilité au fluide caloporteur variables selon le type de cuisson et le type de produits que l'on recherche.

A ce titre, les tapis transporteurs peuvent aller du tapis « plein », constitué de lames de pierre ou de plaques métalliques jointives et articulées entre elles pour constituer, dans le trajet horizontal, une sole de pierre ou métallique pleine et continue, jusqu'à l'extrême inverse, où ce tapis transporteur peut comporter un maillage très ouvert, en particulier pour le transport de moules ou de plaques constituant des ensembles lourds, où seule une convection de sole puissante assure de bonnes performances de cuisson.

En cas de cuisson directement sur sole, c'est la cuisson par conduction et par rayonnement qui donne les meilleurs résultats.

En cas de cuisson de produits sur plaques, l'échange thermique en sole doit être renforcé au-delà des seuls échanges thermiques par conduction et rayonnement, car le produit à cuire n'est pas en contact direct avec la sole chaude du four, et, dans ce cas, une combinaison en sole entre un échange thermique par rayonnement et un apport thermique par convection est nécessaire pour une « saisie » rapide de la pâte en sole, malgré la présence de la plaque.

En cas de cuisson de produits en moules, la masse d'acier importante représentée par les batteries de moules, encore supérieure quand il s'agit de moules avec couvercles nécessaires pour la cuisson de pain de mie, par exemple, se rajoute à la masse de la pâte contenue dans les moules et la cuisson nécessite un très gros apport calorique par la sole qui correspond, dans l'idéal, à une forte convection de sole.

Les cuissons de ce type de produits peuvent être réalisées dans des fours sans convection, mais dans ce cas les durées de cuisson sont beaucoup plus longues, soit environ 30 minutes, sur les fours tunnels conventionnels rayonnants, contre environ 20 minutes sur les fours tunnels à convection de sole.

Dans l'état de la technique, il est également connu d'autres types de fours de cuisson continue n'empruntant pas la forme de tunnel linéaire et qui s'écartent, de ce fait du domaine d'application de la présente invention. Ces fours de cuisson sont strictement limités à la cuisson de produits sur plaques ou en moules du fait des caractéristiques de leur mécanisme qui assure le transport des produits entre l'entrée et la sortie de ces fours.

En particulier, on connait :
- des fours à chariots suspendus ou tractés, eux-mêmes chargés en plaques ou en moules, qui traversent une enceinte de cuisson de grande taille ;
- des fours à bandes spirales traversant une enceinte de cuisson de grande taille ;
- des fours de type vertical cellulaires ou non cellulaires comportant une noria de plaques en colonnes ascendantes et/ou descendantes ;
- des fours comportant une mécanique en boucle fermée transportant des plaques de cuisson constituant des soles solidaires de la mécanique et restant dans le four.

Ces fours, de par leur conception s'écartent sensiblement du domaine de la présente invention, à savoir celui des fours tunnels linéaires et des problèmes de chauffage résultant de ces derniers, problèmes auxquels la présente invention apporte des solutions.

Pour chacun des types de fours décrits correspondant à l'état actuel de la technique, la méthode pour chauffer par la sole est figée et seuls sont réglables, par l'opérateur, (en dehors du réglage habituel du temps de cuisson) les températures de cuisson et, pour les fours à convection ou à brassage d'air, les volumes, donc les vitesses, d'air ou de gaz caloporteurs mis en mouvement.

La rigidité thermique des fours actuellement sur le marché oblige les industriels à démultiplier les fours qu'ils exploitent, étant obligés de les dédier à la cuisson des produits ou familles de produits pour lesquels ils sont thermiquement conçus, ce qui entraîne leur sous-utilisation et, dans le cas d'un transfert de la production d'un produit d'un four à un autre, différent thermiquement, ce sont à la fois la qualité de cuisson et la rentabilité qui en pâtissent.

A ces fours de l'état de la technique, il convient d'ajouter celui décrit dans le document de brevet WO 02/073093, qui consiste en un four de cuisson de produits de boulangerie, viennoiserie et similaires, de type four tunnel. Ce dernier comporte une voûte pourvue de moyens de chauffage alternativement par convection ou rayonnement.

Plus précisément, cette voûte est traversée verticalement par des tubulures ou manchons s'étendant dans l'enceinte de cuisson.

Au travers de certain de ces manchons, le fluide caloporteur peut être soufflé dans l'enceinte de cuisson, en particulier par l'intermédiaire d'une chambre sous pression, ci-après dénommée plénum, communiquant avec ladite enceinte au travers de la paroi supérieure de cette dernière qui est munie d'entrées d'air, pour assurer un chauffage par convection.

La seconde partie des manchons communique avec des sorties d'air, également positionnés également au niveau de ladite paroi supérieure de l'enceinte. Chacune de ces sorties d'air est reliée à une conduite traversant la chambre sous pression et permet de guider l'air sortant de l'enceinte du four et de le mener vers un collecteur placé hors de ladite chambre sous pression.

L'air ainsi récupéré est renvoyé par une turbine vers ladite chambre sous pression après être passé au travers de moyens de chauffage.

Les manchons en question sont positionnés en voûte au niveau d'une plaque montée coulissante à l'intérieur de l'enceinte du four afin de faire varier la position relative desdits manchons par rapport aux entrées / sorties d'air.

On comprend bien que, si un tel four est en mesure de proposer alternativement, en voûte, un chauffage par rayonnement ou convection, voire simultanément les deux, il présente l'inconvénient d'une conception complexe et encombrante en hauteur.

En effet, pour assurer un chauffage par convection, et alimenter en fluide caloporteur les tubulures traversant le plenum en voûte, au-dessus de ce plenum doit nécessairement s'étendre une chambre de distribution en fluide caloporteur desdites tubulures.

Par ailleurs, pour assurer un chauffage convectif plus ou moins efficace en voûte, de nombreuses tubulures doivent ainsi traverser ce plénum, en créant à l'intérieur de ce dernier une résistance, et donc une perte de charge importante, à la circulation du fluide caloporteur dans ce plenum en cas de chauffage par rayonnement. Ceci est encore accentué par le fait que la moitié des tubulures est destinée à permettre une évacuation de l'air, aboutissant finalement à un chauffage et une cuisson non uniforme des produits en voûte.

Il est également prévu de pouvoir amener le fluide caloporteur sous la sole perméable afin de réaliser, de manière similaire, un chauffage par le bas des produits à cuire, et ce en prévoyant par exemple une seconde chambre sous pression, avec une seconde turbine et des moyens de chauffage supplémentaires en dessous de l'enceinte.

En somme, il est encore ici ajouté de la complexité et de l'encombrement au dispositif, sans pouvoir non plus aboutir à une cuisson optimale et homogène en sole, du fait notamment de la présence en alternance d'entrées et de sorties d'air sur tout le long dudit dispositif.

L'innovation décrite dans la présente demande apporte une souplesse d'adaptation thermique destinée à répondre aux préoccupations d'optimisation des moyens de production en boulangerie industrielle, sans concession sur la qualité, l'invention permettant de choisir le type d'échange thermique en sole adapté idéalement au type de produits à cuire.

Ainsi, l'invention concerne plus particulièrement un dispositif innovant qui permet à l'opérateur de choisir son mode de cuisson en sole en sélectionnant au choix :
- une cuisson en sole exclusivement par rayonnement et conduction, ou
- une cuisson en sole exclusivement par convection, ou
- une cuisson en sole combinant le rayonnement, la convection et la conduction.

Un tel dispositif offrant ce choix sur un seul et même four, permettant une modularité de cuisson en sole tout en assurant une homogénéité dans la cuisson et une qualité de produit fini optimale, n'a jamais été réalisé jusqu'à présent.

A cet effet, l'invention concerne un module de cuisson de four tunnel linéaire pour produits de boulangerie, viennoiserie et similaires, comportant une enceinte de cuisson comprenant une sole, sous forme d'un tapis transporteur mobile et perméable à un fluide caloporteur gazeux, une voûte, et des moyens de chauffage en sole et en voûte pour cuire ou précuire lesdits produits venant reposer sur le tapis transporteur soit directement, soit indirectement au travers d'un support de cuisson adapté tel qu'une plaque, un filet ou un moule de cuisson, lesdits moyens de chauffage en sole comprenant une pluralité d'orifices de soufflage du fluide caloporteur gazeux sous ledit tapis transporteur.

Ledit module de cuisson est caractérisé en ce que ledit tapis transporteur est mobile au-dessus de, et repose sur, une surface de glissement comprenant des ouvertures de passage dudit fluide caloporteur, cette surface de glissement étant mobile entre au moins deux positions, dont une position dite de convection où lesdites ouvertures de la surface de glissement coïncident avec les orifices de soufflage des moyens de chauffage en sole pour laisser passer le fluide caloporteur, et au moins une deuxième position dite de rayonnement dans laquelle lesdites ouvertures sont en décalage de ces orifices de soufflage, la surface de glissement formant écran au fluide caloporteur soufflé au travers des orifices de soufflage.

Dans un exemple de réalisation particulier du module de l'invention, les moyens de chauffage en sole comportent des rangées transversales d'orifices de soufflage et ladite surface de glissement consiste en une tôle comprenant des ouvertures agencées également en rangées transversales, écartées selon un pas d'écartement correspondant à celui des rangées transversales des orifices de soufflage.

Dans un mode de réalisation alternatif, les moyens de chauffage en sole comportent des rangées d'orifices de soufflage où les orifices de rangées voisines sont arrangés en quinconce tandis que ladite surface de glissement consiste en une tôle comprenant des ouvertures présentant un arrangement identique à celui des orifices de soufflage.

Une telle disposition en quinconce permet un soufflage plus uniforme au travers du tapis transporteur en position de convection.

Tout préférentiellement, les moyens de chauffage en sole comportent des orifices de soufflage agencées en rangées, selon le cas, transversales ou longitudinales, la surface de glissement comprenant des lames de glissement, selon le cas, transversales ou longitudinales, entre lesdites lames s'étendant des fentes correspondant aux rangées d'orifices de soufflage pour se situer au droit de ces dernières dans la position dite de convection ou en décalage par rapport à ces orifices dans la position dite de rayonnement dans laquelle lesdites lames forment écran au passage de fluide caloporteur.

Avantageusement, dans ce cas de figure où le chemin de glissement est composé de lames de glissement, les moyens de chauffage en sole comportent des rangées, selon le cas transversales ou longitudinales, d'orifices de soufflage écartées selon un pas correspondant au pas d'écartement desdites lames.

Ainsi, dans la position de rayonnement, lorsque les lames de la surface de glissement surplombent directement les orifices de soufflage, lesdites lames sont chauffées par le fluide caloporteur et vont elles-mêmes chauffer la sole sous forme d'un tapis transporteur par conduction et rayonnement permettant la cuisson des produits.

Dans la position de convection, où ce sont les fentes de la surface de glissement qui surmontent directement les orifices de soufflage, le flux de fluide caloporteur gazeux passe entre deux lames au travers du tapis transporteur, procurant une cuisson par convection des produits.

C'est donc dans le cadre d'une démarche inventive que l'on a imaginé remplacer, dans un four tunnel linéaire exclusivement à chauffage par convection en sole selon l'état de la technique tel que rappelé plus haut, le chemin de glissement fixe qui supporte habituellement le tapis transporteur, par un chemin de glissement mobile, composé par exemple de lames de glissement, notamment reliées entre elles et espacées entre elles par des fentes :
- lesquelles lames peuvent être positionnées au-dessus des orifices, ou buses, de soufflage, avec pour effet de dévier le fluide caloporteur, par exemple vers des orifices d'aspiration pratiqués latéralement et sous le niveau du tapis transporteur, et dans ce cas, les lames se chargent lourdement en chaleur, tout en faisant barrage au flux convectif qui ne peut plus traverser le tapis transporteur ;
- ou lesquelles lames sont mises en position de façon à présenter les fentes entre les lames au-dessus des orifices de convection et dans ce cas, le four est un four à convection de sole, les lames ne servant que de support de glissement pour le tapis transporteur.

Dans ce dernier cas, le flux de fluide caloporteur qui traverse le tapis peut être aspiré par des orifices d'aspiration pratiqués dans la partie de la chambre de cuisson qui se trouve au-dessus de ce tapis transporteur.

Des positions intermédiaires, notamment des lames formant un chemin de glissement, entre les deux positions extrêmes, à savoir la position dite de rayonnement et la position dite de convection, sont possibles, ce qui permet de combiner une chaleur de sole résultant d'un mélange de convection et de rayonnement.

Ces propriétés sont bien sûr, reprises par les autres modes de réalisation de l'invention, tel que cela apparaîtra dans la description détaillée qui va suivre.

Les avantages découlant de la présente invention consistent principalement en ce que, au moyen d'un seul et même module de cuisson ou d'un seul et même four tunnel linéaire comportant au moins un tel module de cuisson, on peut proposer un mode de cuisson par conduction et/ou rayonnement uniquement ou par convection uniquement, voire combiner les deux.

Grâce à l'application de l'invention à plusieurs modules composant le four, il est possible, pour un même produit, de disposer de réglages indépendants pour chaque module, permettant d'adapter précisément, à chaque étape de la cuisson, le mode de transmission de chaleur en sole pour une qualité de cuisson optimale.

Il est donc clairement établi qu'un module de cuisson de four tunnel linéaire selon l'invention, à échange thermique en sole sélectionnable entre le rayonnement, la convection ou la combinaison des deux, en fonction des caractéristiques des produits à cuire, et un four tunnel linéaire composé d'au moins un tel module, constituent un réel avantage pour l'industriel.

Grâce à l'invention, l'industriel disposera d'un seul et même four pouvant assurer indifféremment la cuisson des différentes familles de produits dans des conditions d'efficacité, de qualité, et donc de rentabilité, indiscutables.

Avantageusement, les moyens de chauffage en sole, consistent en un plénum de convection.

De manière préférentielle, ladite surface de glissement est montée mobile grâce à des moyens d'entraînement, tel qu'un mécanisme sur poussoir, aptes à donner à la surface de glissement une course adaptée au passage de ladite surface depuis la position de convection à la position de rayonnement et inversement.

Par exemple, lorsque ladite surface comprend des lames de glissement, cette course peut correspondre, sensiblement, à la moitié de l'écartement entre deux lames.

Lorsque la surface de glissement est constituée de lames de glissement, celles-ci peuvent se présenter sous la forme de gouttières inversée en sorte de servir également de guide pour le gaz caloporteur qui est soufflé afin de le ramener sur les côtés du module, pour éviter une circulation du flux de gaz caloporteur dans la chambre de cuisson.

Des moyens d'aspiration du fluide caloporteur gazeux en sole peuvent également être prévus dans le présent module de cuisson, ces moyens comprenant des ouvertures d'aspiration se situant sur l'un au moins des côtés latéraux de ladite sole et sous cette dernière.

Préférentiellement, lesdites ouvertures d'aspiration communiquent, au travers de gaines adaptées, avec un circuit d'aspiration centralisé auquel sont raccordées, également, des ouvertures d'aspiration situées dans l'enceinte de cuisson, au-dessus du tapis transporteur, lesdits moyens d'aspiration comportant en outre des moyens de gestion d'aspiration selon le cas en dessous et/ou au-dessus du niveau de ladite sole.

L'invention est également relative à un four tunnel linéaire comprenant au moins un module de cuisson tel que décrit précédemment.

Ledit four tunnel linéaire de cuisson peut avantageusement comporter une pluralité de tels modules qui sont juxtaposés.

Ainsi, de manière avantageuse, un (ou plusieurs) module composant l'ensemble peut avoir son propre réglage de cuisson, par exemple en ce qui concerne la température du fluide caloporteur ou bien encore le mode de chauffage des produits, par convection essentiellement, par conduction et/ou rayonnement essentiellement, ou par combinaison des deux modes. De la même manière, les surfaces de glissement mobiles sont préférentiellement indépendantes pour chacun des modules de cuisson qui composent l'ensemble du four tunnel linéaire.

Ainsi, on peut proposer des expositions différentes au flux de gaz caloporteur lors de la phase de cuisson des produits.

D'autres buts et avantages de la présente invention apparaîtront au cours de la description qui va suivre se rapportant à un exemple de réalisation donné à titre indicatif et non limitatif.

La compréhension de cette description sera facilitée en se référant aux dessins ci-joints dans lesquels :

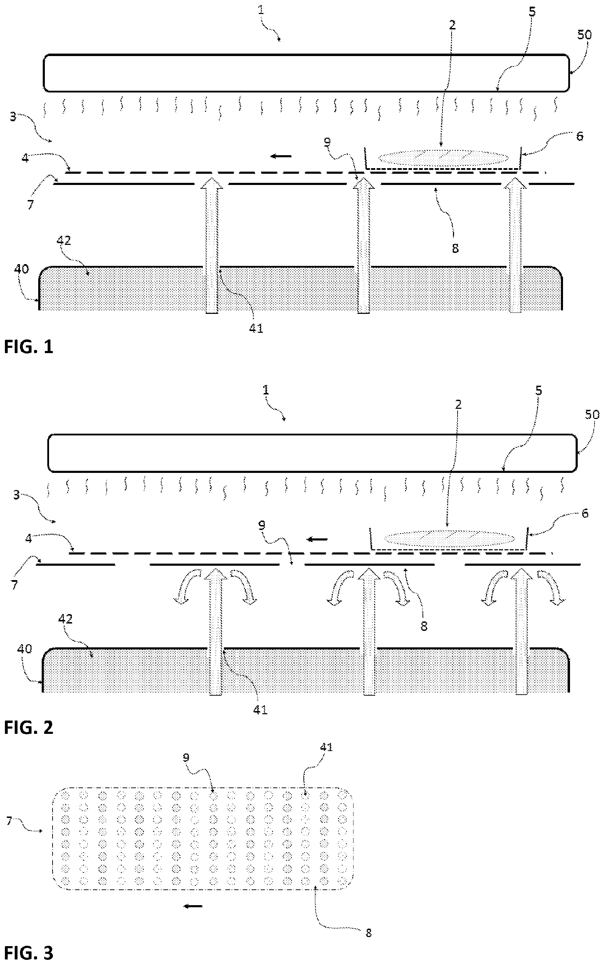

- La figure 1 est une représentation schématisée, et en coupe longitudinale, d'un mode de réalisation particulier du module de cuisson selon l'invention, en position dite de convection, où les ouvertures de la surface de glissement coïncident avec les orifices de soufflage des moyens de chauffage en sole, en sorte de laisser passer le flux de gaz caloporteur au travers du tapis transporteur ;
- La figure 2 est une représentation schématisée similaire à la figure 1 à la différence que la surface de glissement est en position dite de rayonnement, les ouvertures pratiquées sur la surface de glissement étant décalées par rapport aux orifices de soufflage des moyens de chauffage en sole, le flux de gaz caloporteur butant sur la face inférieure de la surface de glissement ;
- La figure 3 est une représentation schématisée, vue de dessus, d'un mode de réalisation particulier de la présente invention, dans la position dite de rayonnement, les orifices de soufflage des moyens de chauffage en sole étant en décalage par rapport aux ouvertures de la surface de glissement, ces dernières étant représentées en traits discontinus ;

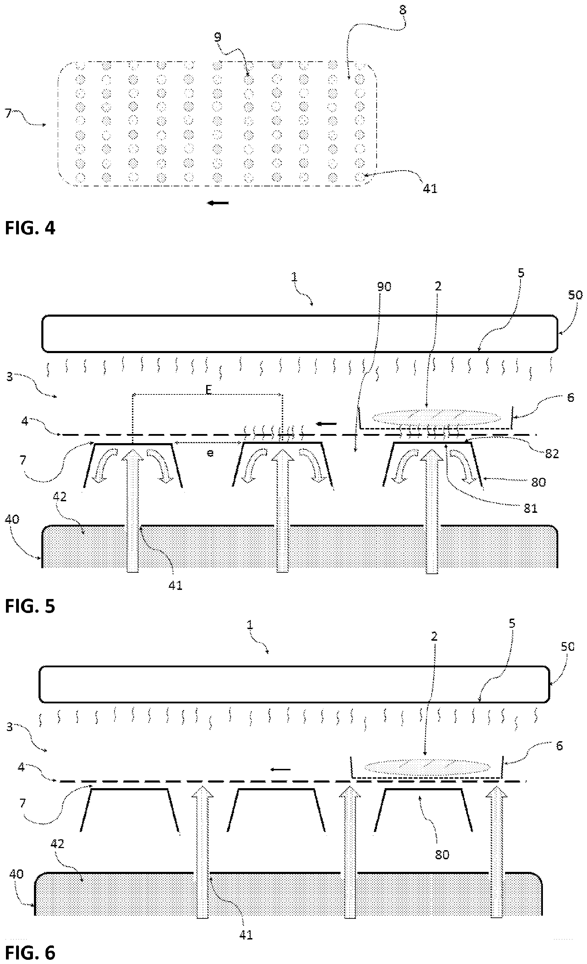

- La figure 4 est une représentation similaire à la figure 3, correspondant à un autre mode de réalisation, dans la position dite de rayonnement ;
- La figure 5 est une représentation schématisée, et en coupe longitudinale, d'un mode de réalisation particulier du module de cuisson selon l'invention lorsque la surface de glissement du tapis transporteur comporte une pluralité de lames de glissement transversales, ces dernières étant positionnées directement au-dessus des orifices de soufflage des moyens de chauffage en sole, en position dite de rayonnement ;
- La figure 6 est une représentation schématisée similaire à la figure 5, à l'exception du fait que les lames du chemin de glissement sont décalées par rapport aux orifices de soufflage des moyen de chauffage, en sorte de laisser passer le flux de gaz caloporteur au travers du tapis transporteur ;

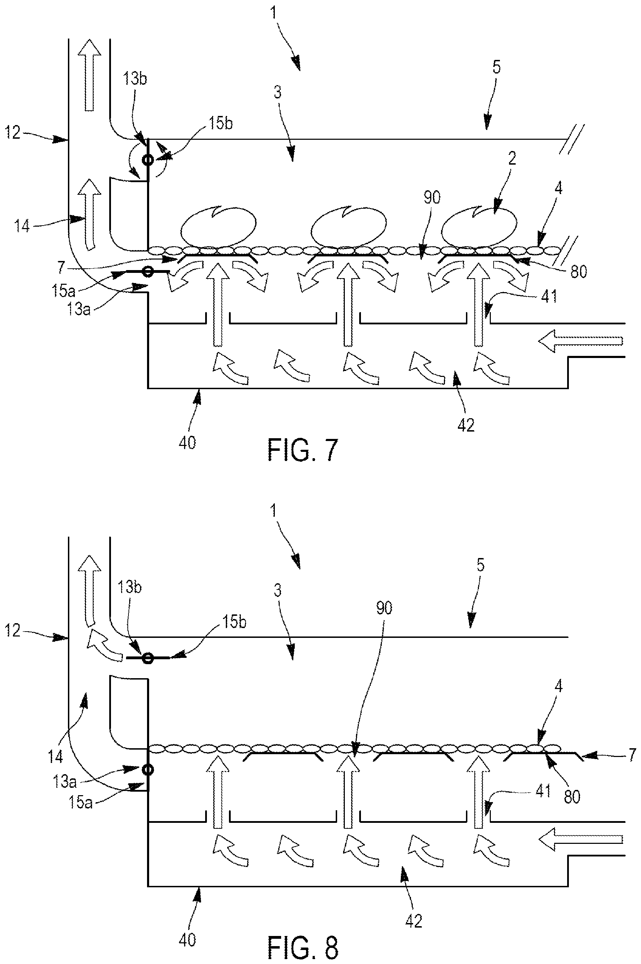

- La figure 7 est une représentation schématisée, et en coupe transversale, d'un mode de réalisation particulier du module de cuisson selon l'invention, lorsque la surface de glissement du tapis transporteur comporte une pluralité de lames de glissement longitudinales ces dernières étant positionnées directement au-dessus des orifices de soufflage des moyens de chauffage en sole, en position dite de rayonnement, le flux de gaz caloporteur butant sur la face inférieure desdites lames et étant aspiré via des moyens d'aspiration situés sous le tapis ;
- La figure 8 est une représentation similaire à la figure 7, à l'exception du fait que les lames longitudinales du chemin de glissement sont en position de convection, décalées par rapport aux orifices de soufflage des moyen de chauffage, et que le flux de gaz caloporteur est aspiré via des moyens d'aspiration situés au-dessus du tapis ;

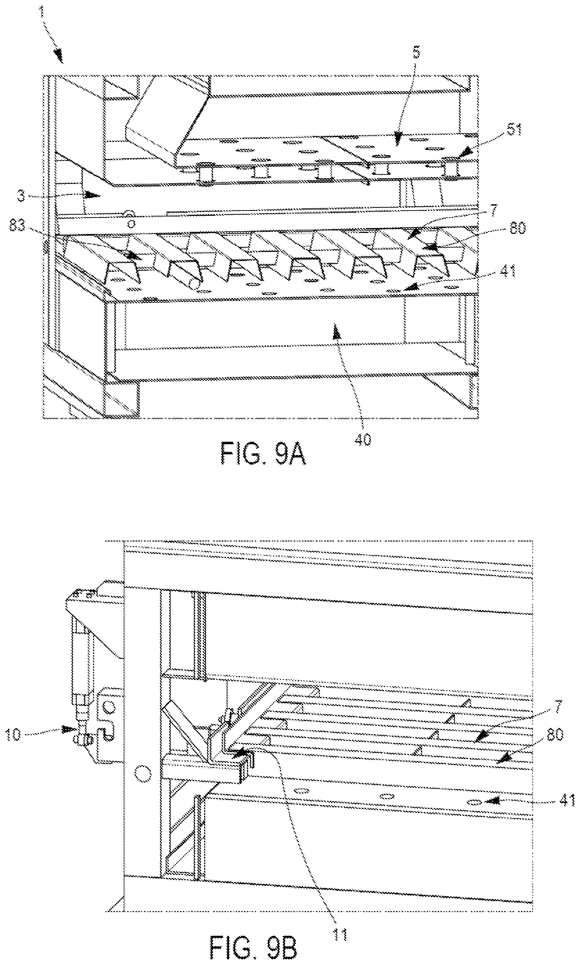

- Les figures 9A et 9B représentent schématiquement, et en perspective, un détail d'un module de cuisson de l'invention, à savoir le chemin de glissement du tapis transporteur, ainsi que, pour la figure 9B, un mécanisme sur poussoir extérieur à l'enceinte de cuisson et apte à entrainer le chemin de glissement, et notamment les lames de celui-ci, en déplacement.

Telle que représentée dans les figures des dessins ci-joints, la présente invention concerne un module de cuisson 1 de produits 2 de boulangerie, viennoiserie ou similaires, pour un four tunnel linéaire.

Comme l'illustrent schématiquement les figures 1 et 2 notamment, ce module de cuisson 1 comporte au moins une enceinte de cuisson 3 comprenant une sole et une voûte 5.

En particulier, cette sole peut se présenter sous la forme d'un tapis transporteur 4 conçu ajouré afin de permettre, au travers de ce dernier, un chauffage par convection des produits 2 à cuire.

Sur le tapis transporteur 4 viennent reposer les produits 2 à cuire ou à précuire, soit directement, soit indirectement, comme représenté sur les figures 1 et 2, par exemple par l'intermédiaire de supports de cuisson 6 adaptés, tels que des plaques de cuisson, des filets, des moules ou similaires.

Dans le cadre de la présente invention, le tapis transporteur 4 est mobile et traverse l'enceinte de cuisson 3 depuis une entrée vers une sortie, en décrivant un circuit bouclé, et le module 1 est un module de cuisson qualifié de « continu », le sens de déplacement du tapis étant symbolisé par une flèche.

La sole et la voûte 5 comprennent des moyens de chauffage 40, 50 respectivement.

En ce qui concerne les moyens de chauffage 40 en sole, ceux-ci peuvent consister, par exemple, en un plénum de chauffage 42 par convection comportant une pluralité d'orifices de soufflage 41, ou fentes de soufflage, d'un fluide caloporteur gazeux.

Plus précisément, ledit fluide caloporteur gazeux est chauffé au travers d'un circuit de chauffage approprié, non représenté sur les figures jointes, avant d'être refoulé sous le plénum 42 comportant des orifices ou fentes 41 de soufflage, qui sont de préférence agencés en rangées transversales, comme illustré par exemple sur la figure 9A.

Au niveau de ladite voûte 5, lesdits moyens de chauffage auront pour but d'assurer une cuisson des produits 2 par rayonnement, comme souhaitent l'illustrer les figures 1, 2, 5 et 6, ou bien encore par convection, au travers d'une pluralité d'orifices de soufflage 51 en voûte qui sont représentés sur la figure 9A jointe.

En ce qui concerne la cuisson des produits 2 au niveau de la sole du module 1 de l'invention, celle-ci peut être avantageusement effectuée, au choix de l'industriel et en fonction des produits 2 à cuire, essentiellement par rayonnement et conduction, ce mode de cuisson étant plus particulièrement représenté sur les figures 2, 5 et 7, ou bien selon un mode de chauffage principal par convection en sole, comme illustré figure 1, 6 et 8.

Dans cette optique ladite sole, sous la forme d'un tapis transporteur 4, repose sur une surface de glissement 7, par exemple sous la forme d'une tôle 8, qui comprend des ouvertures 9 de passage du fluide caloporteur.

Ladite surface de glissement 7 est mobile entre au moins deux positions :
- une première position dite de convection : dans cette position, les ouvertures 9 de la surface de glissement 7 coïncident avec les orifices de soufflage 41, comme représenté sur la figure 1. Ici, le fluide caloporteur peut passer au travers du tapis transporteur 4 ;
- une seconde position dite de rayonnement, représentée sur la figure 2 : il y a un décalage entre les ouvertures 9 de la surface de glissement 7 et les orifices de soufflage 41 et ladite surface 7 forme écran au fluide caloporteur. Des positions intermédiaires peuvent également être adoptées par la surface de glissement 7.

Comme visible sur la figure 3, les moyens de chauffage 40 en sole peuvent comporter des rangées transversales d'orifices de soufflage 41, à savoir perpendiculaires au sens de déplacement du tapis transporteur 4, ces orifices 41 étant représentés en traits discontinus, tandis que la surface de glissement 7 comprend des ouvertures 9 également agencées en rangées transversales, ces dernières étant écartées selon un pas d'écartement correspondant à celui des rangées transversales des orifices de soufflage 41.

Le mode de réalisation de la figure 4, encore plus avantageux, permet un soufflage particulièrement uniforme du tapis 4, les orifices de soufflage 41, tout comme les ouvertures 9 de la tôle 8, étant agencés en quinconce.

Dans un autre mode de réalisation, représenté sur les figures 5 et 6, la surface de glissement 7 peut comporter, avantageusement, une pluralité de lames de glissement 80, écartées préférentiellement de manière équidistante sur sensiblement l'ensemble de la longueur du module de cuisson 1, et s'étendant sensiblement transversalement, par exemple, au sens de déplacement dudit tapis 4, comme le montrent ces figures.

On comprend ainsi, et également au travers de ces figures, que deux lames de glissement 80 successives sont séparées l'une de l'autre par une fente 90 longitudinale.

On définit, pour la suite de la description, l'écartement E entre deux lames de glissement 80 successives qui correspond à la distance séparant le plan médian desdites deux lames de glissement 80 et l'espacement e entre deux lames de glissement 80 successives qui correspond à la distance séparant lesdites lames de glissement 80.

Lesdites lames de glissement 80 sont préférentiellement solidarisées entre elles par l'une et/ou l'autre de leur(s) extrémité(s) latérale(s), par exemple par l'intermédiaire de cornières 11, représentées sur la figure 9B, ou similaires.

De manière particulière au module de cuisson 1 de l'invention, ladite surface de glissement 7 est mobile au-dessus des moyens de chauffage 40 en sole, par exemple un plenum de convection 42.

Plus particulièrement encore, la surface de glissement 7 est susceptible d'adopter au moins une première position où les lames de glissement 80 de ladite surface 7 forment totalement ou partiellement écran aux orifices de soufflage 41 et au moins une seconde position, décalée par rapport à ladite première position, où le flux de fluide caloporteur, propulsé au travers des orifices 41, peut passer au travers de la sole, consistant en un tapis transporteur 4.

Dans un exemple de réalisation tout particulièrement avantageux, la surface de glissement 7 du module 1 de l'invention est mobile entre une première position où lesdites lames de glissement 80 surmontent directement lesdits orifices de soufflage 41 et une seconde position, décalée par rapport à ladite première position, dans laquelle les lames de glissement 80 sont effacées pour laisser passer le flux de gaz caloporteur au travers du tapis transporteur 4.

La première position, dans laquelle les lames de glissement 80 forment avantageusement totalement écran au flux de gaz caloporteur soufflé au travers des orifices 41 depuis les moyens de chauffage 40 en sole, est représentée schématiquement sur la figure 5 annexée.

Dans cette configuration, les lames de glissement 80 sont placées sur le trajet du flux de gaz caloporteur chaud issu, de préférence, du plenum de convection 42, ledit flux venant buter sur la face inférieure 81 des lames de glissement 80 et, sur la face supérieure 82 de ces mêmes lames 80, vient reposer la sole, définie par un tapis transporteur 4.

Les lames de glissement 80 ainsi chauffées forment une tôle de rayonnement assurant un chauffage du tapis transporteur 4 lui-même, ce dernier permettant, au travers d'une élévation de sa température, une cuisson des produits 2 essentiellement par rayonnement et conduction.

Ainsi, dans cette première position, on évite un passage de gaz caloporteur directement au travers du tapis transporteur 4.

Comme représenté sur les figures 5 et 6 annexées, les lames de glissement 80 présentent avantageusement un profil en forme de U inversé, ou de gouttière renversée, lesdites branches du U pouvant être sensiblement évasées à leur extrémité opposée à la portion plane constituant la surface de glissement 7 du tapis transporteur 4, un tel profil permettant de rabattre et de guider le flux de gaz caloporteur.

En outre, après avoir atteint la face inférieure 81 des lames de glissement 80, le fluide caloporteur, ayant transmis ses calories auxdites lames 80, et qui se retrouve dans l'intervalle entre lesdites lames 80 et les moyens de chauffage 40 en sole peut être aisément aspiré au travers de moyens d'aspiration 12, représentés schématiquement dans le mode de réalisation des figures 7 et 8, où les lames de glissement 80 consistent en des lames longitudinales.

Dans ces figures 7 et 8, on utilise des numéros de référence identiques pour désigner des éléments du module 1 identiques ou correspondants à ceux retrouvés dans les autres figures.

Ainsi, selon un mode de réalisation de l'invention, le module de cuisson 1 comprend des moyens d'aspiration du fluide caloporteur en sole 4.

Ces moyens d'aspiration 12 comportent des ouvertures d'aspiration 13a se situant sur l'un au moins des côtés latéraux de la sole, en dessous de cette dernière, de préférence sur chacun des côtés latéraux, lesdites ouvertures d'aspiration 13a étant réparties avantageusement sur l'ensemble de la longueur de ladite sole.

Selon un mode de réalisation préférentiel, ces ouvertures d'aspiration 13a communiquent, au travers de gaines 14 adaptées, avec un circuit d'aspiration centralisé auquel sont raccordées, également, des ouvertures d'aspiration 13b dans l'enceinte de cuisson 3, au-dessus du niveau de la sole, là encore visible dans les figures 7 et 8.

Avantageusement, ces moyens d'aspiration 12 comportent des moyens de gestion d'aspiration 15a, 15b selon le cas en dessous et/ou au-dessus du niveau de la sole, en fonction du mode de cuisson qui est recherché par l'utilisateur.

Ainsi, par exemple, avantageusement, lorsque l'utilisateur souhaite cuire ses produits par conduction et/ou rayonnement, le flux soufflé en sole peut être réaspiré en sole, sous cette dernière, comme illustré plus particulièrement sur la figure 7.

Lorsqu'une convection dans ladite enceinte 3 est recherchée, il est envisageable d'avoir un soufflage en sole, par exemple, et une aspiration dans l'enceinte de cuisson 3 comme illustré plus particulièrement sur la figure 8.

Pour en revenir à présent à la forme des lames de glissement 80 du chemin de glissement 7, il a déjà été précisé plus haut que celles-ci peuvent présenter un profil en U inversé ou gouttière renversée. En outre, lesdites lames 80, qui sont préférentiellement des tôles, présentent avantageusement une épaisseur relativement réduite, en sorte d'éviter qu'elles ne présentent une inertie thermique trop importante.

Toutefois, afin de garantir un raidissement de l'ensemble et éviter une déformation due au chauffage ou au supportage du tapis transporteur 4, le module 1 peut comporter des moyens raidisseurs desdites lames de glissement 80, par exemple sous la forme d'une ou plusieurs nervures 83 reliant, dans le sens longitudinal et deux à deux, lesdites lames 80.

Dans le mode de réalisation représenté sur la figure 9A, le module 1 comporte une seule nervure 83 entre deux lames de glissement 80 successives, reliant lesdites deux lames 80 sensiblement en leurs centres.

Ainsi, notamment du fait de la faible inertie thermique des lames de glissement 80, il est envisageable de passer rapidement d'un mode de chauffage essentiellement par rayonnement et conduction à un mode de chauffage par convection.

A ce propos, si le module de cuisson 1 de l'invention doit être utilisé en mode de cuisson par convection, en fonction des produits 2 qui doivent être cuits, la surface de glissement 7 est déplacée, depuis la première position dite de rayonnement représentée sur les figures 5 et 7, vers une deuxième position dite de convection, dans laquelle les lames de glissement 80 sont décalées par rapport aux orifices 41 de soufflage du fluide caloporteur gazeux.

Cette deuxième position de la surface de glissement 7 comprenant des lames de glissement 80 est représentée schématiquement sur les figures 6 et 8 annexée.

Ainsi, on comprend que, dans cette position, ce sont à présent les fentes 90 de la surface de glissement 7 qui sont au droit des orifices de soufflage 41.

Le flux de fluide caloporteur gazeux propulsé au travers des orifices de soufflage 41, traverse alors le tapis transporteur 4 perméable, par exemple au travers d'ajours.

Dans cette position, les produits 2 à cuire sont soumis à un chauffage par convection en sole.

Les orifices de soufflage 41, par lesquels est propulsé le flux de fluide caloporteur gazeux, permettant une cuisson des produits 2 essentiellement par rayonnement ou bien par convection, sont de préférence agencés en rangées transversales au niveau des moyens de chauffage 40 en sole, comme déjà indiqué plus haut.

Avantageusement, lesdites rangées transversales d'orifices de soufflage 41 sont écartées selon un pas correspondant, sensiblement, au pas d'écartement E des lames de glissement 80 du chemin de glissement 7, qui correspond lui à la distance séparant le plan médian de deux lames 80 successives.

Ainsi, lorsqu'on applique au chemin de glissement 7, au travers de moyens d'entraînement adaptés, une course correspondant sensiblement à la moitié du pas d'écartement E entre deux lames de glissement 80 successives, ledit chemin de glissement 7 passe d'une position où le plan médian des lames 80 se trouve au-dessus du centre des orifices de soufflage 41, à la position où c'est le plan médian des fentes 90 qui surplombe lesdits orifices 41.

De manière générale, lesdits moyens d'entraînement permettent d'appliquer à la surface de glissement 7 une course adaptée pour permettre, par exemple, le passage de ladite surface 7 depuis la position dite de convection à la position dite de rayonnement, ou inversement.

Ces moyens d'entraînement peuvent adopter différents modes de réalisation à la portée de l'homme du métier.

Ainsi, ils peuvent se présenter sous la forme d'un mécanisme 10 sur poussoir, mettant en œuvre un vérin agissant directement ou indirectement sur lesdites lames de glissement 80, en particulier à hauteur de leurs extrémités latérales au niveau desquelles ces lames 80 sont rendues solidaires.

Le mode de réalisation dans lequel un tel mécanisme 10 entraine la surface de glissement entre les deux positions est représenté sur la figure 9B.

Ledit mécanisme 10 est préférentiellement positionné à l'extérieur de l'enceinte de cuisson 3, en sorte que l'utilisateur a la possibilité de pouvoir passer d'un mode de cuisson à l'autre, et ce même lorsque les produits 2 sont en train de cuire dans le module 1.

Bien sûr, on peut imaginer d'autres mécanismes d'entraînement pour assurer la fonction de déplacement de ces lames de glissement 80 et, plus généralement de la surface de glissement 7, par exemple un mécanisme d'entraînement par chaînes ou similaire.

En outre, en ce qui concerne les lames de glissement 80 du chemin de glissement 7, elles ont été décrites comme étant des lames 80 transversales. Toutefois, l'homme du métier adaptera sans difficulté le présent module à des lames de glissement longitudinales, ce mode de réalisation ayant été illustré sur les figures 7 et 8, les moyens de chauffage en sole comprenant, dans ce cas, par exemple, des rangées longitudinales d'orifices de soufflage 41.

Le module de cuisson 1 de l'invention permet donc, de manière particulièrement avantageuse, de favoriser, selon le type de produits 2 à cuire, soit un chauffage par convection de sole, soit un chauffage essentiellement par rayonnement et conduction, voire combiner les deux.

En somme, un tel module de cuisson 1, conforme à l'invention, offre des conditions de cuisson modulables selon les produits à cuire, ce qui est particulièrement intéressant pour les industriels du secteur de la boulangerie ou similaire.

Enfin, l'invention est également relative à un four tunnel linéaire de cuisson comportant au moins un module de cuisson comme décrit plus haut.

Ledit four tunnel linéaire comprend avantageusement plusieurs de ces modules juxtaposés, ce qui permet, au sein de chacun desdits modules, différents réglages de cuisson, par exemple différentes expositions au flux de gaz caloporteur lors de la phase de cuisson des produits.

## Revendications

1. Module de cuisson (1) de four tunnel linéaire pour produits (2) de boulangerie, viennoiserie et similaires, comportant une enceinte de cuisson (3) comprenant une sole, sous la forme d'un tapis transporteur (4), mobile et perméable à un fluide caloporteur gazeux, une voûte (5), et des moyens de chauffage (40, 50) en sole et en voûte (5) pour cuire ou précuire lesdits produits (2) venant reposer sur le tapis transporteur (4) soit directement, soit indirectement au travers d'un support de cuisson (6) adapté tel qu'une plaque, un filet ou un moule de cuisson, les moyens de chauffage (40) en sole comprenant une pluralité d'orifices de soufflage (41) du fluide caloporteur gazeux sous ledit tapis transporteur (4), ledit module de cuisson (1) étant **caractérisé en ce que** ledit tapis transporteur (4) est mobile au-dessus de, et repose sur, une surface de glissement (7) comprenant des ouvertures (9) de passage dudit fluide caloporteur, cette surface de glissement (7) étant mobile entre au moins deux positions, dont une position dite de convection où lesdites ouvertures (9) de la surface de glissement (7) coïncident avec les orifices de soufflage (41) des moyens de chauffage (40) en sole pour laisser passer le fluide caloporteur, et au moins une deuxième position dite de rayonnement dans laquelle lesdites ouvertures (9) sont en décalage de ces orifices de soufflage (41), la surface de glissement (7) formant écran au fluide caloporteur soufflé au travers des orifices de soufflage (41).

2. Module de cuisson (1) selon la revendication précédente **caractérisé en ce que** les moyens de chauffage (40) en sole comportent des rangées transversales d'orifices de soufflage (41) et **en ce que** ladite surface de glissement (7) consiste en une tôle (8) comprenant des ouvertures (9) agencées en rangées transversales écartées selon un pas d'écartement correspondant à celui des rangées transversales des orifices de soufflage (41).

3. Module de cuisson (1) selon la revendication 1 **caractérisé en ce que** les moyens de chauffage (40) en sole comportent des rangées d'orifices de soufflage (41) où les orifices (41) de rangées voisines sont arrangés en quinconce tandis que ladite surface de glissement (7) consiste en une tôle (8) comprenant des ouvertures (9) présentant un arrangement identique à celui des orifices de soufflage (41) .

4. Module de cuisson (1) selon la revendication 1 **caractérisé par le fait que** les moyens de chauffage (40) en sole comportent des orifices de soufflage (41) agencées en rangées, selon le cas, transversales ou longitudinales, la surface de glissement (7) comprenant des lames de glissement (80), selon le cas, transversales ou longitudinales, entre lesdites lames (80) s'étendant des fentes (90) correspondant aux rangées d'orifices de soufflage (41) pour se situer au droit de ces dernières dans la position dite de convection ou en décalage par rapport à ces orifices (41) dans la position dite de rayonnement dans laquelle lesdites lames (80) forment écran au passage de fluide caloporteur.

5. Module de cuisson (1) selon la revendication précédente **caractérisé en ce que** les moyens de chauffage (40) en sole comportent des rangées, selon le cas transversales ou longitudinales, d'orifices de soufflage (41) écartées selon un pas correspondant au pas d'écartement (E) des lames de glissement (80).

6. Module de cuisson (1) selon l'une quelconque des revendications 4 ou 5 **caractérisé en ce que** ladite surface de glissement (7) est montée mobile grâce à des moyens d'entraînement, tel qu'un mécanisme (10) sur poussoir, aptes à donner à la surface de glissement (7) une course correspondant, sensiblement, à la moitié de l'écartement (E) entre deux lames de glissement (80).

7. Module de cuisson (1) selon l'une quelconque des revendications 4 à 6 **caractérisé en ce que** la sole comporte des moyens raidisseurs des lames de glissement (80), lesdits moyens raidisseurs consistant en au moins une nervure (83) reliant, dans le sens longitudinal ou transversal, selon le cas, et deux à deux, lesdites lames de glissement (80).

8. Module de cuisson (1) selon la revendication précédente **caractérisé en ce qu'**il comporte plusieurs nervures (83) réparties transversalement ou longitudinalement, selon le cas, et reliant lesdites lames de glissement (80).

9. Module de cuisson (1) selon l'une quelconque des revendications précédentes **caractérisé en ce que** ledit moyen de chauffage (40) en sole consiste en un plénum de convection (42).

10. Module de cuisson (1) selon l'une quelconque des revendications précédentes **caractérisé en ce qu'**il comporte des moyens d'aspiration (12) du fluide caloporteur gazeux en sole, comprenant des ouvertures d'aspiration (13a) se situant sur l'un au moins des côtés latéraux de ladite sole et sous cette dernière.

11. Module de cuisson (1) selon la revendication précédente **caractérisé en ce que** lesdites ouvertures d'aspiration (13a) communiquent, au travers de gaines adaptées (14), avec un circuit d'aspiration centralisé auquel sont raccordées, également, des ouvertures d'aspiration (13b) dans l'enceinte de cuisson (3), lesdits moyens d'aspiration (12) comportant en outre des moyens de gestion d'aspiration (15a, 15b) selon le cas en dessous et/ou au-dessus du niveau de la sole.

12. Four tunnel linéaire de cuisson comprenant au moins un module de cuisson (1) selon l'une quelconque des revendications précédentes.

13. Four tunnel linéaire de cuisson comprenant plusieurs modules de cuisson (1), selon l'une quelconque des revendications 1 à 11, juxtaposés.

## Patentansprüche

1. Backmodul (1) eines linearen Tunnelofens für Backwaren, feine Backwaren und ähnliche Produkte (2), umfassend eine Backkammer (3), die einen Herd, in der Form eines Förderbandes (4), der beweglich und für ein gasförmiges Wärmeübertragungsmedium durchlässig ist, ein Gewölbe (5) und Heizmittel (40, 50) in dem Herd und im Gewölbe (5) zum Backen oder Vorbacken der besagten Produkte (2), die mittels eines geeigneten Backträgers (6) wie einer Platte, eines Netzes oder einer Backform entweder direkt oder indirekt auf dem Förderband (4) ruhen, umfasst, wobei die Heizmittel (40) in dem Herd mehrere Öffnungen zum Blasen (41) des gasförmigen Wärmeübertragungsmediums unterhalb des besagten Förderbands (4) umfasst, wobei das besagte Backmodul (1) **dadurch gekennzeichnet ist, dass** das besagte Förderband (4) über einer Gleitfläche (7) beweglich ist und auf dieser ruht, wobei eine Gleitfläche (7) Öffnungen (9) für den Durchgang des besagten Wärmeübertragungsmediums umfasst, wobei diese Gleitfläche (7) zwischen mindestens zwei Positionen beweglich ist, von denen einer sogenannten Konvektionsposition, in der die besagten Öffnungen (9) der Gleitfläche (7) mit den Blasöffnungen (41) der Heizmittel (40) in dem Herd zusammenfallen, um das Wärmeübertragungsmedium durchfliessen zu lassen, und mindestens einer zweiten, sogenannten Strahlungsposition, in der die besagten Öffnungen (9) zu diesen Blasöffnungen (41) versetzt sind, wobei die Gleitfläche (7) ein Schirm für das durch die Blasöffnungen (41) hindurch geblasene Wärmeübertragungsmedium bildet.

2. Backmodul (1) nach dem vorhergehenden Anspruch, **dadurch gekennzeichnet, dass** die Heizmittel (40) in dem Herd Querreihen von Blasöffnungen (41) umfassen und dass die Gleitfläche (7) aus einem Blech besteht (8), das Öffnungen (9) umfasst, die in Querreihen angeordnet sind, die in einem Abstand voneinander beabstandet sind, der demjenigen der Querreihen der Blasöffnungen (41) entspricht.

3. Backmodul (1) nach Anspruch 1, **dadurch gekennzeichnet, dass** die Heizmittel (40) in dem Herd Reihen von Blasöffnungen (41) umfassen, wo die Öffnungen (41) benachbarter Reihen in versetzten Reihen angeordnet sind, während die besagte Gleitfläche (7) aus einem Blech (8) besteht, das Öffnungen (9) umfasst, die eine Anordnung aufweisen, die mit derjenigen der Blasöffnungen (41) identisch ist.

4. Backmodul (1) nach Anspruch 1, **dadurch gekennzeichnet, dass** die Heizmittel (40) in dem Herd Blasöffnungen (41) umfassen, die je nach dem Fall in Quer- oder Längsreihen angeordnet sind, wobei die Gleitfläche (7) je nach dem Fall Quer- oder Längsgleitklingen (80) umfasst, wobei sich zwischen den besagten Klingen (80) Schlitzen (90) erstrecken, die den Reihen von Blasöffnungen (41) entsprechen, sodass sie sich gegenüber diesen letzteren in der sogenannten Konvektionsposition oder versetzt zu diesen Öffnungen (41) in der sogenannten Strahlungsposition befinden, in der die besagten Klingen (80) ein Schirm gegen den Durchgang von Wärmeübertragungsmedium bilden.

5. Backmodul (1) nach dem vorhergehenden Anspruch, **dadurch gekennzeichnet, dass** die Heizmittel (40) in dem Herd je nach dem Fall Quer- oder Längsreihen von Blasöffnungen (41) umfassen, die in einem Abstand voneinander beabstandet sind, der dem Abstand (E) zu einander der Gleitklingen (80) entspricht.

6. Backmodul (1) nach irgendeinem der Ansprüche 4 oder 5, **dadurch gekennzeichnet, dass** die besagte Gleitfläche (7) dank Antriebsmittel, wie eines Mechanismus (10) auf einem Stößel, beweglich gelagert ist, die in der Lage sind, der Gleitfläche (7) einen Hub zu verleihen, der im wesentlichen der Hälfte des Abstands (E) zwischen zwei Gleitklingen (80) entspricht.

7. Backmodul (1) nach irgendeinem der Ansprüche 4 bis 6, **dadurch gekennzeichnet, dass** der Herd Versteifungsmittel für die Gleitklingen (80) umfasst, wobei die Versteifungsmittel aus mindestens einer Rippe (83) bestehen, die die besagten Gleitklingen (80) je nach dem Fall in Längs- oder Querrichtung und paarweise verbindet.

8. Backmodul (1) nach dem vorhergehenden Anspruch, **dadurch gekennzeichnet, dass** es mehrere Rippen (83) umfasst, die je nach dem Fall in Quer- oder Längsrichtung verteilt sind und die besagten Gleitklingen (80) verbinden.

9. Backmodul (1) nach irgendeinem der vorhergehenden Ansprüche, **dadurch gekennzeichnet, dass** das besagte Heizmittel (40) in dem Herd aus einem Konvektionsplenum (42) besteht.

10. Backmodul (1) nach irgendeinem der vorhergehenden Ansprüche, **dadurch gekennzeichnet, dass** es Mittel zum Ansaugen (12) des gasförmigen Wärmeübertragungsmediums in dem Herd umfasst, die Saugöffnungen (13a) umfassen, die sich an mindestens einer der lateralen Seiten des besagten Herdes und unter diesem letzteren befinden.

11. Backmodul (1) nach dem vorhergehenden Anspruch, **dadurch gekennzeichnet, dass** die Saugöffnungen (13a) über angepassten Hüllen (14) mit einem zentralen Saugkreislauf, an dem auch Saugöffnungen (13b) in der Backkammer (3) angeschlossen sind, in Verbindung stehen, wobei die besagten Saugmittel (12) ferner je nach dem Fall unterhalb und/oder oberhalb des Niveaus des Herdes Saugverwaltungsmittel (15a, 15b) umfassen.

12. Linearer Backtunnelofen, umfassend mindestens ein Backmodul (1) nach irgendeinem der vorhergehenden Ansprüche.

13. Linearer Backtunnelofen, umfassend mehrere einandergereihte Backmodulen (1) nach irgendeinem der Ansprüche 1 bis 11.

## Claims

1. Baking module (1) of a linear tunnel oven for bakery, Viennese pastry and similar products (2), including a baking chamber (3) comprising a hearth, in the form of a conveyor belt (4), which is movable and permeable to a gaseous heat-transfer fluid, a vault (5), and heating means (40, 50) in the vault and in the hearth (5) for baking or prebaking said products (2), which rest on the conveyor belt (4) either directly or indirectly through a suitable baking support (6) such as a plate, a net or a baking mold, the heating means (40) in the hearth comprising a plurality of holes for blowing (41) the gaseous heat-transfer fluid under said conveyor belt (4), said baking module (1) being **characterized in that** said conveyor belt (4) is movable above, and rests on, a sliding surface (7) comprising openings (9) for the passing through of said heat-transfer fluid, this sliding surface (7) being movable between at least two positions, among which a so-called convection position, where said openings (9) of the sliding surface (7) coincide with the blowing holes (41) of the heating means (40) in the hearth for letting the heat-transfer fluid pass, and at least one second so-called radiating position, in which said openings (9) are offset with respect to these blowing holes (41), the sliding surface (7) forming a screen for the heat-transfer fluid blown through the blowing holes (41).

2. Baking module (1) according to the preceding claim, wherein the heating means (40) in the hearth include transverse rows of blowing holes (41) and said sliding surface (7) consists of a metal sheet (8) comprising openings (9) arranged in transverse rows spaced apart with a spacing pitch corresponding to that of the transverse rows of the blowing holes (41).

3. Baking module (1) according to claim 1, wherein the heating means (40) in the hearth include rows of blowing holes (41), wherein the holes (41) of neighboring rows are arranged as staggered rows, while said sliding surface (7) consists of a metal sheet (8) comprising openings (9) having an arrangement identical to that of the blowing holes (41).

4. Baking module (1) according to claim 1, wherein the heating means (40) in the hearth include blowing holes (41) arranged, as the case may be, in transverse or longitudinal rows, the sliding surface (7) comprising, as the case may be, transverse or longitudinal sliding blades (80), between said blades (80) extending slits (90) corresponding to the rows of blowing holes (41) so as to be located in front of the latter in the so-called convection position or offset with respect to these holes (41) in the so-called radiating position, in which said blades (80) form a screen against the passing through of heat-transfer fluid.

5. B aking module (1) according to the preceding claim, wherein the heating means (40) in the hearth include, as the case may be, transverse or longitudinal rows of blowing holes (41) spaced apart with a pitch corresponding to the spacing pitch (E) of the sliding blades (80).

6. Baking module (1) according to any one of claims 4 or 5, wherein said sliding surface (7) is movably mounted thanks to driving means, such as a mechanism (10) on a pusher, capable of providing the sliding surface (7) with a stroke corresponding substantially to half the spacing (E) between two sliding blades (80).

7. B aking module (1) according to any one of claims 4 to 6, wherein the hearth includes means for stiffening the sliding blades (80), said stiffening means consisting of at least one rib (83) connecting, in the longitudinal or transverse direction, as the case may be, and by pairs, said sliding blades (80).

8. Baking module (1) according to the preceding claim, wherein it includes several ribs (83) distributed transversely or longitudinally, as the case may be, and connecting said sliding blades (80).

9. Baking module (1) according to any one of the preceding claims, wherein said heating means (40) in the hearth consists of a convection plenum (42).

10. Baking module (1) according to any one of the preceding claims, wherein it includes means for drawing in (12) the gaseous heat-transfer fluid in the hearth, comprising suction openings (13a) located on at least one of the lateral sides of said hearth and under the latter.

11. Baking module (1) according to the preceding claim, wherein said suction openings (13a) communicate, through suitable ducts (14), with a centralized suction circuit, which suction openings (13b) in the baking chamber (3) are also connected to, said suction means (12) further including suction management means (15a, 15b), as the case may be, under and/or above of the level of the hearth.

12. Linear baking tunnel oven comprising at least one baking module (1) according to any one of the preceding claims.

13. Linear baking tunnel oven comprising several juxtaposed baking modules (1) according to any one of claims 1 to 11.
